# EUROPÄISCHE PATENTSCHRIFT

(11) **EP 1 355 760 B1**
(45) Veröffentlichungstag und Bekanntmachung des Hinweises auf die Patenterteilung: **04.05.2005**
(21) Anmeldenummer: 02701179.0
(22) Anmeldetag: 10.01.2002
(51) Int. Cl.: B23K 26/34, B29C 67/00, B22F 3/105

(54) **VERFAHREN UND VORRICHTUNG ZUM SELEKTIVEN LASERSCHMELZEN VON METALLISCHEN WERKSTOFFEN**
METHOD AND DEVICE FOR THE SELECTIVE LASER SINTERING OF METALLIC SUBSTANCES
PROCEDE ET DISPOSITIF DE FUSION SELECTIVE AU LASER DE MATIERES METALLIQUES

(30) Priorität: 02.02.2001 DE 10104732
(43) Veröffentlichungstag der Anmeldung: 29.10.2003
(73) Patentinhaber: Fraunhofer-Gesellschaft zur Förderung der angewandten Forschung e.V., 80686 München (DE)
(72) Erfinder: MEINERS, Wilhelm, 52072 Aachen (DE); WISSENBACH, Konrad, 52134 Herzogenrath (DE); OVER, Christoph, 52072 Aachen (DE)
(74) Vertreter: Gagel, Roland, Dr.
(86) Internationale Anmeldenummer: PCT/DE2002/000049
(87) Internationale Veröffentlichungsnummer: WO 2002/060635

(56) Entgegenhaltungen:
- EP-A- 0 764 487
- WO-A-96/29192
- FR-A- 2 774 931

## Beschreibung

### Technisches Anwendungsgebiet

Die vorliegende Erfindung betrifft eine Vorrichtung sowie ein Verfahren zum selektiven Laser-Schmelzen von metallischen Werkstoffen in einer Prozesskammer mit einem Aufbauvolumen, das durch Seitenwandungen sowie eine in der Höhe verschiebbare Bauplattform für den Aufbau eines Bauteils begrenzt ist, wobei das Bauteil schichtweise durch wiederholtes Aufbringen einer Schicht aus Werkstoffpulver und Aufschmelzen der Schicht mit einem Laserstrahl auf einer Substratplatte aufgebaut wird, die beabstandet von den Seitenwandungen auf der Bauplattform aufliegt.

Die vorliegende Vorrichtung sowie das zugehörige Verfahren können für das so genannte Rapid Prototyping in der Produktentwicklung eingesetzt werden, um die Produktentwicklungszeit zu verkürzen sowie die Produktqualität zu steigern. Dies wird dadurch ermöglicht, dass mittels eines Rapid Prototyping Verfahrens wie dem selektiven Laser-Schmelzen der vorliegenden Erfindung Prototypen-Bauteile sehr schnell direkt aus dem 3D-CAD-Modell hergestellt und anschließend bewertet werden können. Die zeitaufwendige Erstellung eines NC-Programms für die Fräs- oder Erodierbearbeitung oder für die Herstellung formgebender Werkzeuge entfällt.

Die Entwicklung neuer bzw. die Weiterentwicklung. bestehender Rapid Prototyping Verfahren hat das Ziel, möglichst seriennahe oder sogar serienidentische Werkstoffe verarbeiten zu können. Dies gilt vor allem für metallische Prototypen oder Prototypwerkzeuge. Das vorliegende Verfahren des selektiven Laser-Schmelzens ermöglicht hierbei die Herstellung von Bauteilen aus handelsüblichen Stählen, also hochschmelzenden Metallen bzw. Metalllegierungen, oder anderen metallischen Werkstoffen. Die Bauteile werden schichtweise auf einer Bauplattform bzw. einer darauf aufgebrachten Substratplatte aufgebaut. Dazu wird der Werkstoff in Pulverform wiederholt als dünne Schicht auf die Substratplatte aufgebracht und lokal entsprechend der zu erzeugenden Bauteilgeometrie in der jeweiligen Schichtebene mit einem Laserstrahl aufgeschmolzen. Die mit diesem Verfahren hergestellten Bauteile aus Metall, wie beispielsweise aus Edelstahl 1.4404, aus Titan oder aus Aluminium, erreichen bezüglich ihrer Dichte und Festigkeit die angegebenen Werkstoffspezifikationen. Damit können sie als Funktionsprototypen oder direkt als belastungsfähiges Bauteil eingesetzt werden.

### Stand der Technik

Aus A. Gebhardt, Rapid Prototyping, Carl Hanser Verlag München Wien, Seiten 115/116, sind Vorrichtungen und Verfahren für das Rapid Prototyping bekannt, bei denen die Prototypen-Bauteile mit der Technik des selektiven Laser-Sinterns aus niedrig schmelzenden Kunststoffen hergestellt werden. Das eingesetzte Kunststoffpulver setzt sich dabei aus leicht vorverdichteten Körnchen zusammen, die mit Hilfe des Laserstrahls Schicht für Schicht örtlich leicht angeschmolzen werden und sich nach der Erstarrung zu einer festen Schicht verbinden. Zur Verringerung der durch den Laserstrahl zum Anschmelzen einzubringenden Energie wird bei diesem Verfahren die Prozesskammer bis knapp unterhalb der Schmelztemperatur des Kunststoffpulvers beheizt. Hierdurch werden der gesamte Bauraum, d.h. die Bauplattform, die Seitenwandungen, das Bauteil, das aufgetragene sowie das Bauteil umgebende Pulver, und die Atmosphäre in der Prozesskammer gleichmäßig auf eine Temperatur kurz unterhalb der Schmelztemperatur des Kunststoffpulvers, d.h. unterhalb von 200° C, aufgeheizt. Dies reduziert den mit dem Laser einzubringenden Energieeintrag zum Anschmelzen des Pulvers erheblich. Die Vorwärmung des Prozessraumvolumens erfolgt bei einem derartigen Verfahren in der Regel von oben mittels eines Infrarotstrahlers oder durch Einleiten eines heissen Gases in die Prozesskammer.
Eine derartige Technik zur Verringerung der Energiedichte des Laserstrahls lässt sich bei der Herstellung von Bauteilen aus hochschmelzenden metallischen Werkstoffen jedoch aufgrund der sehr hohen Schmelztemperaturen dieser Werkstoffe nicht realisieren.

Ein weiteres Verfahren sowie eine zugehörige Vorrichtung für das Rapid Prototyping mittels selektivem Laser-Sintern sind aus der WO 96/29192 A1 bekannt. Bei der Vorrichtung dieser Druckschrift werden die zum Fassen des Pulverbetts erforderlichen seitlichen Begrenzungswände des Aufbauvolumens sowie die Bodenplatte während des Bauprozesses direkt aus dem Werkstoffpulver aufgebaut, so dass nach Fertigstellung des Bauteils der gesamte Komplex aus Boden, Seitenwänden und dem gefertigten Bauteil in dem stützenden Pulver aus der Anlage genommen werden kann. Zur Vekürzung der Aufbauzeit wird ein Aufbau vorgeschlagen, bei dem in der Bauplattform eine Heizspirale integriert ist, die zu Beginn des Bauprozesses für eine bestimmte Zeitspanne eine Temperatur zwischen 80° und 160° C erzeugt, um die Verfestigung der Bodenschicht nicht durch den Laser sondern durch diese Zusatzbeheizung herbeizuführen. Die Verfestigung der Schicht wird bei diesen Temperaturen erreicht, da die eingesetzten Werkstoffe Kunststoffe oder sehr niedrig schmelzende Legierungen sind, die Schmelztemperaturen von deutlich unter 200 °C aufweisen.

Ein Verfahren sowie eine Vorrichtung zum selektiven Laser-Schmelzen hochschmelzender metallischer Werkstoffpulver ist aus der DE 196 49 865 C1 bekannt. Die Vorrichtung umfasst ein Aufbauvolumen in einer Prozesskammer, das unterhalb einer Bodenfläche der Prozesskammer vorgesehen und durch Seitenwandungen sowie eine in der Höhe verschiebbare Bauplattform für den Aufbau eines Bauteils begrenzt ist. In der Prozesskammer ist weiterhin eine Nivelliereinrichtung zur Verteilung von Werkstoffpulver als Schicht konstanter Dicke über einem Bereich der Bodenfläche vorgesehen. Über eine Laseroptik mit zugehöriger Abtasteinrichtung erfolgt das lokale Aufschmelzen jeder Schicht entsprechend der gewünschten Bauteilgeometrie. Mit dieser Vorrichtung lassen sich Bauteile aus hochschmelzenden Metallen wie beispielsweise handelsüblichen Stählen herstellen, deren Materialeigenschaften denen eines in üblicher Weise produzierten Bauteils entsprechen oder zumindest sehr nahe kommen.

Eine derartige Vorrichtung ist auch aus der FR-A-2 774 931 bekannt, wobei zusätzlich die Prozesskammer auf eine Temperatur von 900°C aufgeheizt wird.

Gerade bei der Fertigung derartiger Bauteile aus hochschmelzenden Metallen bzw. Metalllegierungen tritt jedoch das Problem auf, dass bei der Bearbeitung hohe Spannungen in dem Bauteil auftreten, die während der Herstellung zu einer Rissbildung führen können.

Die Aufgabe der vorliegenden Erfindung besteht darin, eine Vorrichtung sowie ein Verfahren zum selektiven Laser-Schmelzen hochschmelzender metallischer Werkstoffe anzugeben, die eine Herstellung der Bauteile mit reduzierter Spannungsbildung ermöglichen.

### Darstellung der Erfindung

Die Aufgabe wird mit der Vorrichtung und dem Verfahren gemäß den Patentansprüchen 1 und 9 gelöst. Vorteilhafte Ausgestaltungen der Vorrichtung sind Gegenstand der Unteransprüche.

Die Vorrichtung setzt sich in bekannter Weise aus einer Prozesskammer mit einem Aufbauvolumen zusammen, das unterhalb einer Bodenfläche der Prozesskammer vorgesehen und durch Seitenwandungen sowie eine in der Höhe verschiebbare Bauplattform für den Aufbau des Bauteils begrenzt ist. Die Vorrichtung weist weiterhin eine Nivelliereinrichtung zur Verteilung von Werkstoffpulver als Schicht konstanter Dicke über einem Bereich der Bodenfläche sowie eine Laseroptik und eine Abtasteinrichtung zur Abtastung eines Bereiches der Bodenfläche mit einem Laserstrahl auf. Die Vorrichtung zeichnet sich dadurch aus, dass beabstandet von den Seitenwandungen eine Heizplatte auf der Bodenplattform aufgebracht oder in deren Oberfläche integriert ist, die so ausgebildet und durch eine Isolationsschicht gegen die Bauplattform thermisch isoliert ist, dass sie im Heizbetrieb Temperaturen oberhalb von 500° C erreicht. Die Heizplatte dient hierbei entweder direkt als Substratplatte für den Aufbau des Bauteils oder als Unterlage für diese Substratplatte. Eine derartige metallische Substratplatte ist beim selektiven Laser-Schmelzen erforderlich, um die entsprechenden Bauteile darauf aufbauen und aus dem Aufbauvolumen entnehmen zu können. Die Substratplatte dient ferner dazu, das Bauteil während des Bauprozesses auf der Bauplattform zu fixieren.

Die Erfinder der vorliegenden Vorrichtung bzw. des vorliegenden Verfahrens haben erkannt, dass beim selektiven Laser-Schmelzen von hochschmelzenden metallischen Werkstoffpulvern eine Aufheizung des Bauteils auf Temperaturen von mindestens 500°C zu einer deutlichen Verminderung der Spannungen im Bauteil während des Aufbauprozesses führen. Überraschenderweise hat sich hierbei gezeigt, dass die Realisierung einer derartigen Erwärmung in einer Vorrichtung zum selektiven Laser-Schmelzen durch direktes Beheizen der fertiggestellten Bauteilbereiche erreicht werden kann, ohne eine aufwendige Gestaltung der Aussenwände der Prozesskammer sowie Probleme aufgrund des thermischen Verzuges der in der Prozesskammer vorgesehenen Komponenten in Kauf nehmen zu müssen.
Voraussetzung für die problemlose Realisierung dieser Temperaturen im Bauteil ist die Ausgestaltung der Vorrichtung gemäß dem vorliegenden Patentanspruch 1. Diese Ausgestaltung erfordert neben der Ausbildung der Heizplatte zur Erzeugung derart hoher Temperaturen an ihrer Oberfläche, diese beabstandet von den Seitenwandungen vorzusehen und ausreichend gegenüber der Bauplattform zu isolieren. Durch die gute Wärmeleitung der mit dem Verfahren des selektiven Laser-Schmelzens aufgeschmolzenen metallischen Werkstoffschichten wird das auf der Substrat- bzw. Heizplatte befindliche Bauteil bzw. der fertiggestellte Teil dieses Bauteils ebenfalls auf die eingestellte Temperatur gebracht. Eine Wärmeisolation wird nur zwischen der Substratplatte bzw. Heizplatte und der Bauplattform benötigt. Die Isolation zwischen dem heissen Bauteil und den Seitenwänden des Bauraums wird vom umgebenden Pulver übernommen, da die Wärmeleitung einer Pulverschüttung sehr gering ist. Mit dieser Ausgestaltung der vorliegenden Vorrichtung ist die hohe Temperatur daher ausschließlich auf die aufgeschmolzenen Bereiche des Bauteils und das nächstliegende Werkstoffpulver beschränkt.

Bei einer Ausführungsform ist die Substratplatte direkt als Heizplatte ausgebildet, beispielsweise durch direkter Integration von Heizdrähten in diese Substratplatte. Weiterhin kann die Substratplatte auf eine gesonderte Heizplatte gelegt werden oder direkt über Induktion erwärmt werden.

Die Heizplatte bzw. Substratplatte sollte bei dieser Ausgestaltung einen geringen thermischen Ausdehnungskoeffizienten aufweisen. Vorzugsweise liegt dieser Wärmeausdehnungskoeffizient unterhalb von 15*10⁻⁶ K⁻¹.

Bei einer weiteren Ausführungsform sind Mittel zur lateralen Fixierung der Heizplatte auf der Bauplattform vorgesehen.

In der bevorzugten Ausführungsform der vorliegenden Vorrichtung ist ein Temperaturfühler in der Heizplatte oder der Substratplatte angeordnet. Der Temperaturfühler ist mit einer Regelung für die Energieversorgung der Heizplatte verbunden, um die Temperatur der Heiz- bzw. Substratplatte während des Aufbauprozesses des Bauteils konstant zu halten. Die Heizung erfolgt selbstverständlich während des gesamten Bauprozesses.

### Wege zur Ausführung der Erfindung

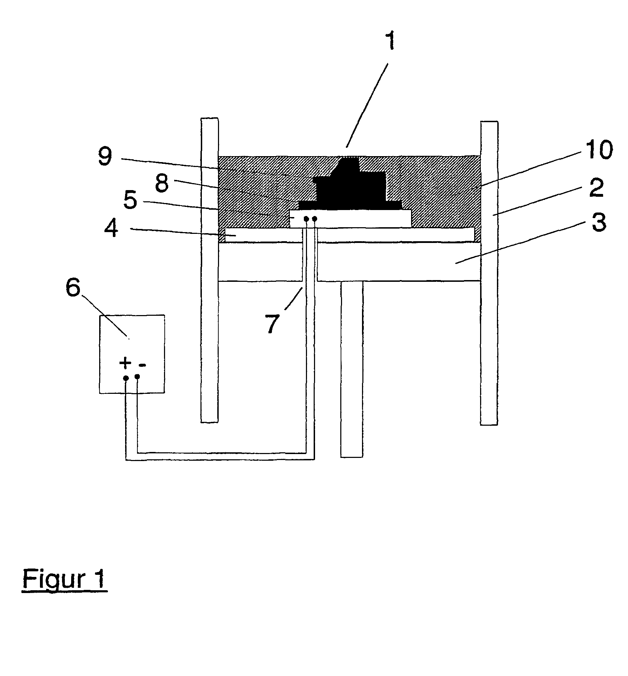

Die Vorrichtung wird nachfolgend anhand eines Ausführungsbeispiels in Verbindung mit der Zeichnung nochmals kurz erläutert.
Die Figur zeigt hierbei schematisch einen beispielhaften Ausschnitt aus einer erfindungsgemäßen Vorrichtung. In dem Ausschnitt ist das Aufbauvolumen 1 mit den Seitenwandungen 2 und der das Aufbauvolumen nach unten begrenzenden, in der Höhe verschiebbaren Bauplattform 3 zu erkennen. Die Höhenverstellung der Bauplattform 3 wird über einen in der Abbildung nicht dargestellten Antrieb realisiert. Auf der Bauplattform 3 liegt eine Isolationsplatte 4 auf, die eine auf der Isolationsplatte 4 aufliegende Heizplatte 5 thermisch gegen die Bauplattform 3 isoliert. Die Energieversorgung 6 der Heizplatte 5 ist über entsprechende Durchführungen 7 in der Bauplattform 3 mit der Heizplatte 5 verbunden.
Im vorliegenden Beispiel wird eine gesonderte Substratplatte 8 eingesetzt, die direkt auf der Heizplatte 5 aufliegt. Die Substratplatte 8 besteht aus dem gleichen oder einem ähnlichen Material wie das herzustellende Bauteil 9. In der Figur ist das Bauteil 9 bereits fertig und in das umgebende Werkstoffpulver 10 eingebettet.
Der Aufbau dieses Bauteils 9 erfolgt in bekannter Weise, indem die Bauplattform 3 zunächst mit der Substratplatte 8 bis knapp unterhalb der Bodenfläche der Prozesskammer, die auf Höhe der oberen Enden der Seitenwandungen 2 liegt, geschoben wird. Anschließend wird eine Pulverschicht auf die Bauplattform mit der Substratplatte aufgetragen und mit einem Laserstrahl entsprechend der gewünschten Bauteilgeometrie dieser Schichtebene aufgeschmolzen. Die Bauplattform wird anschließend um eine definierte Schichtdicke nach unten abgesenkt, und der Vorgang beginnt erneut. Während dieses gesamten Prozesses wird beim vorliegenden Verfahren die Heizplatte 5 auf einer Temperatur von 500° C oder darüber betrieben, so dass das Bauteil 9 bzw. die fertiggestellten Bereiche davon während des Aufbauprozesses jederzeit annähernd diese Temperatur aufweisen. Durch diese hohe Temperatur des Bauteils, die in der Regel noch deutlich unterhalb des Schmelzpunktes des Bauteils liegt, wird eine Spannungsverminderung im Bauteil während des Aufbauprozesses erreicht, so dass die Gefahr einer Rissbildung oder von im Bauteil verbleibenden Spannungen vermieden werden.

Selbstverständlich lässt sich die entsprechend ausgestaltete Heizplatte auch zur Wärmenachbehandlung der gefertigten Bauteile nach deren Fertigstellung einsetzen.

### BEZUGSZEICHENLISTE

| | |
|---|---|
| 1 | Aufbauvolumen |
| 2 | Seitenwandungen |
| 3 | Bauplattform |
| 4 | Isolationsplatte |
| 5 | Heizplatte |
| 6 | Energieversorgung für die Heizplatte |
| 7 | Durchführungen |
| 8 | Substratplatte |
| 9 | Bauteil |
| 10 | Werkstoffpulver |

## Patentansprüche

1. Vorrichtung zum selektiven Laser-Schmelzen von metallischen Werkstoffen, die ein Aufbauvolumen in einer Prozeßkammer aufweist, das unterhalb einer Bodenfläche der Prozeßkammer vorgesehen und durch Seitenwandungen (2) sowie eine in der Höhe verschiebbare Bauplattform (3) für den Aufbau eines Bauteils (9) begrenzt ist, und die mit einer Nivelliereinrichtung zur Verteilung von Werkstoffpulver als Schicht konstanter Dicke über einem Bereich der Bodenfläche sowie mit einer Laseroptik und einer Abtasteinrichtung zur Abtastung eines Bereiches der Bodenfläche mit einem Laserstrahl ausgestattet ist,
**dadurch gekennzeichnet,**
**dass** beabstandet von den Seitenwandungen (2) eine Heizplatte (5) auf der Bauplattform (3) aufgebracht oder in deren Oberfläche integriert ist, wobei die Heizplatte (5) so ausgebildet und durch eine Isolationsschicht (4) gegen die Bauplattform (2) thermisch isoliert ist, dass sie im Heizbetrieb Temperaturen von ≥ 500 °C erreicht.

2. Vorrichtung nach Anspruch 1,
**dadurch gekennzeichnet,**
**dass** die Heizplatte (5) als Substratplatte (8) ausgebildet ist, auf der das Bauteil (9) aufgebaut wird.

3. Vorrichtung nach Anspruch 1 oder 2,
**dadurch gekennzeichnet,**
**dass** die Heizplatte (5) integrierte Heizdrähte aufweist.

4. Vorrichtung nach Anspruch 1 oder 2,
**dadurch gekennzeichnet,**
**dass** eine Induktionseinrichtung zur induktiven Heizung der Heizplatte (5) vorgesehen ist.

5. Vorrichtung nach einem der Ansprüche 1 bis 4,
**dadurch gekennzeichnet,**
**dass** die Heizplatte (5) aus einem Material mit einem thermischen Ausdehnungskoeffizienten von ≤ 15*10⁻⁶ K⁻¹ besteht.

6. Vorrichtung nach einem der Ansprüche 1 bis 5,
**dadurch gekennzeichnet,**
**dass** die Heizplatte (5) auf einer Isolationsplatte (4) als Isolationsschicht aufliegt, die die Heizplatte (5) seitlich überragt.

7. Vorrichtung nach einem der Ansprüche 1 bis 6,
**dadurch gekennzeichnet,**
**dass** eine Regelung in Verbindung mit einem in der Heizplatte (5) oder in der Substratplatte (8) angeordneten Temperaturfühler vorgesehen ist, die die Heizplatte (5) bzw. Substratplatte (8) auf konstanter Temperatur hält.

8. Vorrichtung nach einem der Ansprüche 1 bis 7,
**dadurch gekennzeichnet,**
**dass** Mittel zur lateralen Fixierung der Heizplatte (5) auf der Bauplattform (3) vorgesehen sind.

9. Verfahren zum selektiven Laser-Schmelzen von metallischen Werkstoffen in einer Prozesskammer mit einem Aufbauvolumen, das durch Seitenwandungen (2) sowie eine in der Höhe verschiebbare Bauplattform (3) für den Aufbau eines Bauteils (9) begrenzt ist, wobei das Bauteil (9) schichtweise durch wiederholtes Aufbringen einer Schicht aus Werkstoffpulver und Aufschmelzen der Schicht mit einem Laserstrahl auf einer Substratplatte (8) aufgebaut wird, die beabstandet von den Seitenwandungen (2) auf der Bauplattform (3) aufliegt,
**dadurch gekennzeichnet,**
**dass** die Substratplatte (8) gegenüber der Bauplattform (3) thermisch isoliert und während des Aufbauprozesses auf Temperaturen von ≥ 500 °C aufgeheizt wird.

## Claims

1. A device for selective laser sintering of metallic substances which is provided with a construction volume in a process chamber, said construction volume being provided below a floor area of said process chamber and being delimited for building up a component (9) by side walls (2) and a construction platform (3), which is adjustable in height, and said device is provided with a leveling unit for spreading a powdered substance as a layer of constant thickness over a section of the floor area as well as with a laser optic and a scanning unit for scanning a region of the floor area with a laser beam,
**characterized in**
**that** a heating plate (5) is placed on said construction platform (3) at a distance from said side walls (2) or is integrated in the surface of said construction platform (3), with said heating plate (5) being designed in such a manner and being thermally insulated by an insulation layer (4) from said construction platform (3) that it reaches temperatures of ≥ 500°C during heating operation.

2. A device according to claim 1,
**characterized in**
**that** said heating plate (5) is designed as a substrate plate (8), on which said component (9) is built up.

3. A device according to claim 1 or 2,
**characterized in**
**that** said heating plate (5) is provided with integrated heating wires.

4. A device according to claim 1 or 2,
**characterized in**
**that** an induction device is provided for inductive heating of said heating plate (5).

5. A device according to one of the claims 1 to 4,
**characterized in**
**that** said heating plate (5) is made of a substance with a thermal expansion coefficient of ≤ 15*10⁻⁶ K⁻¹.

6. A device according to one of the claims 1 to 5,
**characterized in**
**that** said heating plate (5) lies on an insulation plate (4) as an insulation layer, which extends laterally beyond said heating plate (5).

7. A device according to one of the claims 1 to 6,
**characterized in**
**that** a control means is provided in connection with a temperature sensor disposed in said heating plate (5) or in said substrate plate (8), said control means maintaining said heating plate (5) respectively said substrate plate (8) at a constant temperature.

8. A device according to one of the claims 1 to 7,
**characterized in**
**that** means are provided for affixing of said heating plate (5) laterally on said construction platform (3).

9. A method for selective laser sintering of metallic substances in a process chamber having a construction volume, which is delimited by side walls (2) and by a construction platform (3), which is adjustable in height, for building up a component (9), with said component (9) being built up by means of repeated application of a layer of a powdered substance and sintering, using a laser beam, said layer onto a substrate plate (8), which lies on said construction platform (3) at a distance from said side walls (2),
**characterized in**
**that** said substrate plate (8) is thermally insulated from said construction platform (3) and is heated to temperatures of ≥500°C during the building up process.

## Revendications

1. Dispositif à la fusion sélective à laser des matériaux métalliques, qui comprend un volume de constitution dans une chambre de processus, qui se trouve en dessous d'une surface de fond de la chambre de processus et qui est limité par des parois latérales (2) ainsi que par un plateforme de constitution (3) déplaçable en hauteur pour la constitution d'un composant (9), et qui est muni d'un moyen égaliseur pour la distribution du matériau en poudre sous forme d'une couche à épaisseur constante sur une zone de ladite surface de fond, et également d'un système optique à laser et un dispositif de balayage afin de balayer une zone de ladite surface de fond moyennant un faisceau laser,
**caractérisé en ce**
**qu'**une plaque chauffante (5) est placé sur ledit plateforme de constitution (3), à un écart desdites parois latérales (2), ou est intégré dans la surface dudit plateforme, à ladite plaque chauffante (5) étant configurée et isolée thermiquement par une couche isolante (4) relativement audit plateforme de constitution (2) d'une telle manière, qu'elle achève des températures de > 500 °C en opération de chauffage.

2. Dispositif selon la revendication 1,
**caractérisé en ce**
**que** ladite plaque chauffante (5) est configurée sous forme d'une plaque de substrat (8) sur laquelle le composant (9) est constitué.

3. Dispositif selon la revendication 1 ou 2,
**caractérisé en ce**
**que** ladite plaque chauffante (5) comprend des filaments chauffants intégrés.

4. Dispositif selon la revendication 1 ou 2,
**caractérisé en ce**
**qu'**un moyen inducteur est disposé afin de chauffer, de manière inductive, ladite plaque chauffante (5).

5. Dispositif selon une quelconque des revendications 1 à 4,
**caractérisé en ce**
**que** ladite plaque thermique (5) consiste en un matériau à un coefficient de dilatation thermique de ≤ 15·10⁻⁶ K⁻¹.

6. Dispositif selon une quelconque des revendications 1 à 5,
**caractérisé en ce**
**que** ladite plaque chauffante (5) reste sur une plaque isolante (4) en tant que couche d'isolement, qui fait saillie latérale de ladite plaque chauffante (5).

7. Dispositif selon une quelconque des revendications 1 à 6,
**caractérisé en ce**
**qu'**une unité de réglage est disposée, en combinaison avec une sonde de température disposée dans ladite plaque chauffante (5) ou dans ladite plaque de substrat (8), qui maintient la température de ladite plaque chauffante (5) ou respectivement ladite plaque de substrat (8) à un niveau constant.

8. Dispositif selon une quelconque des revendications 1 à 7,
**caractérisé en ce**
**que** des moyens sont disposés pour le fixage latéral de ladite plaque chauffante (5) sur ledit plateforme de constitution (3).

9. Procédé de fusion sélective à laser des matériaux métalliques dans une chambre de processus à un volume de constitution limité par des parois latérales (2) ainsi que par un plateforme de constitution (3), déplaçable en hauteur, pour la constitution d'un composant /9), audit composant (9) étant constitué par couches moyennant le dépôt répété d'une couche en un matériau en poudre et par la fusion de ladite couche moyennant un faisceau laser sur une plaque de substrat (8), qui reste sur ledit plateforme de constitution (3) à un écart desdites parois latérales (2),
**caractérisée en ce**
**que** ladite plaque de substrat (8) est thermiquement isolée dudit plateforme de constitution (3) et est chauffée aux températures de ≥ 500 °C au cours du processus de constitution.
